# EUROPÄISCHE PATENTSCHRIFT

(11) **EP 3 693 927 B1**
(45) Veröffentlichungstag und Bekanntmachung des Hinweises auf die Patenterteilung: **10.03.2021**
(21) Anmeldenummer: 20150825.6
(22) Anmeldetag: 09.01.2020
(51) Int. Cl.: G06T 7/80, G06T 7/70, G01C 11/02, G01S 7/497

(54) **AUSRICHTEN EINER ZEILENKAMERA MIT DREIECKEN ALS AUSRICHTZIEL**
ALIGNMENT OF A LINE SCAN CAMERA WITH TRIANGLES AS ALIGNMENT TARGETS
ALIGNEMENT D'UNE CAMÉRA À BALAYAGE LINÉAIRE AVEC DES TRIANGLES COMME CIBLES D'ALIGNEMENT.

(30) Priorität: 05.02.2019 DE 102019102783
(43) Veröffentlichungstag der Anmeldung: 12.08.2020
(73) Patentinhaber: SICK AG, 79183 Waldkirch (DE)
(72) Erfinder: Schneider, Dr. Florian, 79276 Reute (DE); Bertz, Denise, 79194 Gundelfingen (DE)

(56) Entgegenhaltungen:
- EP-A2- 3 176 606
- JP-A- 2005 274 272
- HA HYOWON ET AL: "Deltille Grids for Geometric Camera Calibration", 2017 IEEE INTERNATIONAL CONFERENCE ON COMPUTER VISION (ICCV), IEEE, 22. Oktober 2017 (2017-10-22), Seiten 5354-5362, XP033283414, DOI: 10.1109/ICCV.2017.571 [gefunden am 2017-12-22]

## Beschreibung

Die Erfindung betrifft ein Ausrichtverfahren für eine Kamera mit einem Ausrichtziel gemäß Anspruch 1.

Kameras werden in vielfältiger Weise im industriellen Umfeld eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionale Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

In vielen wichtigen Anwendungen sollen bewegte Objekte erfasst werden. Ein Beispiel ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

In Falle bewegter Objekte stellen Zeilenkameras eine etablierte Technologie dar, um zweidimensionale Bilder nach und nach im Laufe der Relativbewegung aus den aufgenommenen Zeilen zusammenzusetzen. Barcodes können von einer Zeilenkamera auch direkt in einem Zug gelesen werden, wobei dann die Relativbewegung genutzt wird, um den Barcode zu irgendeinem Zeitpunkt ins Lesefeld der Zeilenkamera zu führen.

Um ihre Aufgaben zu erfüllen, sollte die Kamera justiert beziehungsweise kalibriert sein. Damit ist die Positionierung und Ausrichtung der Kamera einschließlich Bildsensor und Optik in sich und gegenüber ihrem Gehäuse gemeint, die beispielsweise im Rahmen der Herstellung oder Endprüfung eingestellt oder überprüft werden. Es kann aber auch die Ausrichtung in der konkreten Montagesituation der Anwendung betreffen.

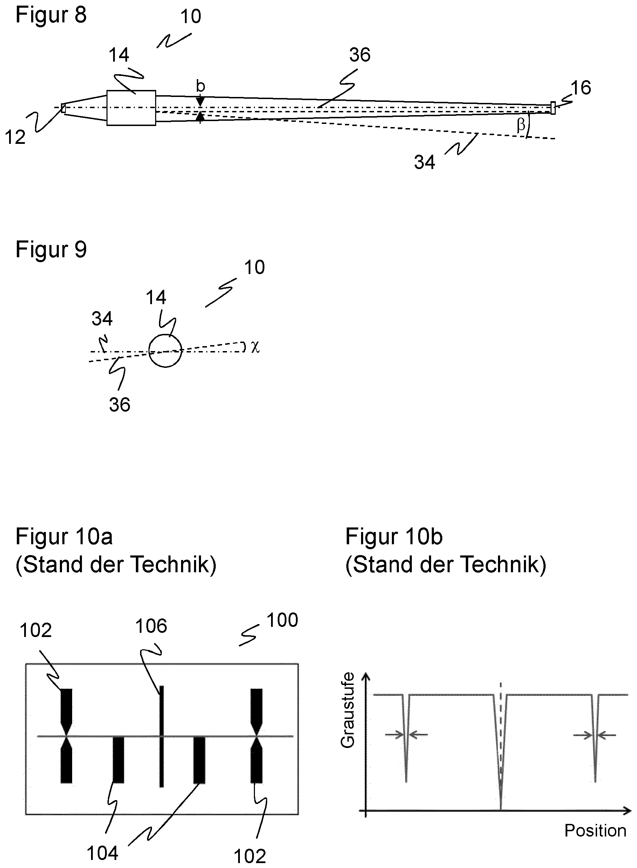

Für die Justage von Zeilenkameras werden typischerweise Sanduhr-Targets verwendet. Figur 10a zeigt ein Beispiel eines solchen herkömmlichen Ausrichtziels 100 mit verschiedenen Kontrastmarken. Neben den beiden namensgebenden Sanduhren 102 sind zwei Vorzeichenbalken 104 und ein zentrales Merkmal 106 für die Position der optischen Achse vorgesehen.

Figur 10b zeigt das zugehörige Sensorsignal eines ideal justierten Systems, d.h. die aufgenommene Intensität oder Graustufe in Abhängigkeit von der Position des zugehörigen Pixels längs der Zeilenausrichtung. Die Signale der beiden Sanduhren 102 sind sehr schmal ausgebildet. Das zentrale Merkmal 106 für die Position der optischen Achse befindet sich in der Zeilenmitte. Die Vorzeichenbalken 104 wären nur dann im Sensorsignal zu sehen, wenn eine Abweichung vom Ideal nach unten vorliegt. In einem nicht perfekt justierten System wären zudem beiden Signale der Sanduhren 102 breiter. Bei einem parallelen Versatz wären sie untereinander gleich breit. Im Falle eines schräg ausgerichteten Systems weichen sie voneinander ab.

Ein Nachteil des herkömmlichen Ausrichtziels 100 ist, dass die Signalbreite im ideal ausgerichteten Fall sehr schwer auszuwerten ist. Je feiner die Strukturen, desto größer ist der Einfluss der Objektiv-Abbildungsleistung.

Die DE 10 2015 119 707 B3 offenbart ein Verfahren zum Ausrichten eines Laserscanners. Dazu wird ein Referenzobjekt abgetastet, das mehrere streifenförmige Markierungen einschließlich eines Dreiecks aufweist, die doppelt in punktgespiegelter Anordnung vorgesehen sind.

Aus der WO 2012/048420 A1 ist ein optisches Positionierverfahren bekannt, das ein Ziel mit mehreren trapezförmigen Markierungen verwendet.

Die JP 2005/274272 A befasst sich mit der Kalibrierung einer Zeilenkamera. Als Ziel wird dabei eine Anordnung zweier an der vertikalen Mittellinie gespiegelter Dreiecke verwendet.

Die Arbeit von Su, Daobilige et al. "Improved Cross-Ratio Invariant-Based Intrinsic Calibration of A Hyperspectral Line-Scan Camera." Sensors 18.6 (2018): 1885 beschreibt ein Verfahren zum Erfassen der intrinsischen Parameter einer Zeilenkamera. Als Kalibrierziel ist eine Reihe von Dreiecken in zwei senkrecht zueinander stehenden Abschnitten vorgesehen.

Ausrichtziele mit dreieckförmigen Teilelementen sind auch aus HA HYOWON ET AL: "Deltille Grids for Geometric Camera Calibration", 2017 IEEE INTERNATIONAL CONFERENCE ON COMPUTER VISION (ICCV), 22-10-2017, Seiten 5354-5362 bekannt.

Es ist daher Aufgabe der Erfindung, die Ausrichtung einer Kamera mit einem Ausrichtziel zu verbessern.

Diese Aufgabe wird durch ein Verfahren zum Ausrichten einer Kamera nach Anspruch 1 gelöst. Bei der Kamera handelt es sich um eine Zeilenkamera, was einen zeilenförmigen Teilbereich einer Matrixkamera zum Ausrichten einschließt. Das Ausrichtziel weist mehrere dreieckförmige Kontrastmarken auf. Zusätzliche Kontrastmarken anderer Geometrie sind denkbar, aber nicht erforderlich, also vorzugsweise auch nicht vorgesehen. Die Kontrastmarken sind in einer Reihe angeordnet, die hier als horizontal bezeichnet wird. Das ist auf eine übliche aufrechte Stellung von Kamera und Ausrichtziel bezogen, aber nicht einschränkend zu verstehen, sofern insgesamt eine Drehung aus der Horizontalen gewünscht ist.

Die Erfindung geht von dem Grundgedanken aus, dass unter den Dreiecken beide Orientierungen nach oben und nach unten vorgesehen sind. Es gibt folglich je eine Gruppe von Dreiecken, die nach oben beziehungsweise nach unten zeigen. Die Gesamtzahl der Dreiecke sowie die Anzahl von Dreiecken in den beiden Gruppen mit Orientierung nach oben beziehungsweise nach unten sind Parameter beim Design des Ausrichtziels.

Die Erfindung hat den Vorteil, dass die Auswertung des Kamerasignals, das beim Aufnehmen des Ausrichtziels erzeugt wird, besonders wenig von der Abbildungsqualität der Optik der Kamera abhängig ist. Die dreieckförmigen Kontrastmuster in ihrer besonderen Anordnung führen zu breiten Peaks im Kamerasignal, und diese vergrößerte Breite lässt sich wesentlich robuster und genauer auswerten. Aufgrund der hohen Merkmalsanzahl des Ausrichtziels können Korrelations- oder Approximationsverfahren verwendet werden, um noch stabilere und somit genauere Auswertungen durchzuführen. Dabei lässt sich die Merkmalsanzahl durch die Anzahl der dreieckförmigen Kontrastmarken beeinflussen.

Mindestens einige, insbesondere alle Kontrastmarken weisen bevorzugt die Form eines gleichschenkeligen Dreiecks auf. Diese Symmetrie vereinfacht die Auswertung, da die Mittenposition einer horizontal durch das Dreieck verlaufenden Linie nicht von der Höhe abhängt, auf der sie das Dreieck schneidet. Der Winkel der gleichschenkligen Dreiecke, also anschaulich wie flach oder spitz das gleichschenklige Dreieck ist, bleibt ein noch wählbarer Parameter.

Mindestens einige, insbesondere alle Kontrastmarken weisen bevorzugt eine zueinander kongruente Form auf. Die Kontrastmarken haben also untereinander die gleiche dreieckige Geometrie, wobei eine Gruppe gegenüber der anderen vertikal gespiegelt ist. Damit sind die Signale von den einzelnen Kontrastmarken untereinander gleichwertig und besonders leicht und robust auswertbar.

Die Kontrastmarken sind vorzugsweise in der Reihe auf gleicher Höhe ausgerichtet. Das bedeutet, dass es eine Horizontale gibt, die durch den gleichen charakteristischen Punkt der Dreiecke zumindest innerhalb einer Gruppe verläuft, etwa die Grundlinie, die Spitze oder den Schwerpunkt. Bei kongruenten Dreiecken verläuft eine Horizontale durch die Spitzen der einen und längs der Grundlinie der anderen Gruppe. Die Dreiecke sind zudem bevorzugt gleichmäßig voneinander beabstandet.

Die Kontrastmarken zeigen bevorzugt mit der Spitze alternierend nach oben und nach unten. Das impliziert, dass die Gruppen sich in ihrer Anzahl höchstens um eine Kontrastmarke unterscheiden.

Bei dem erfindungsgemäßen Verfahren erfolgt das Ausrichten einer Kamera, insbesondere Zeilenkamera, mit einem erfindungsgemäßen Ausrichtziel. Ausrichten bedeutet, dass die dafür erforderliche Justierung aufgefunden und/oder überprüft wird. Es wird ein Bild von zumindest einer Linie des Ausrichtziels aufgenommen. Bei einer Zeilenkamera ist das ein Gesamtbild, wobei ein seitliches Abschneiden denkbar bleibt, bei einer Matrixkamera kann ein entsprechender Teilbereich ausgewählt werden. In dem Bild werden die Kontrastmarken lokalisiert. Das ist durch den vorgegebenen deutlichen Intensitätsunterschied an den Rändern und das besonders hohe oder besonders geringe Reflexions- oder Remissionsvermögen der Kontrastmarken leicht möglich, da sich entsprechende Extrema und Flanken in der Intensität des Kamerasignals ausbilden. Die Breite der Kontrastmarken in Richtung der Linie wird bestimmt. Solange für die Kontrastmarken das gleiche Maß angewandt wird, kommt es auf das konkrete Maß nicht an, beispielsweise eine Halbwertsbreite eines durch die Kontrastmarke erzeugten Peaks im Kamerasignal. Die Ausrichtung wird als richtig angesehen, wenn alle Breiten übereinstimmen, wobei eine definierte Toleranz zugelassen werden kann.

Vorzugsweise wird die Orientierung der Kamera verändert, bis alle Breiten übereinstimmen. Das kann von Hand oder automatisch mit entsprechender elektronischer Aktorik erfolgen. Prinzipiell gibt es dabei fünf Freiheitsgrade: Eine horizontale Verschiebung a, eine vertikale Verschiebung b, ein horizontales Verkippen oder Schielen a, ein vertikales Verkippen oder Schielen β und ein Verdrehen χ um die optische Achse der Kamera. Das Ausrichtziel ermöglicht Auswertungen, die Rückschlüsse auf den noch anzupassenden Freiheitsgrad und das Ausmaß der erforderlichen Korrektur geben, wie nachfolgend noch genauer erläutert. Das kann eine automatische Regelung nutzen, zumindest eine der Auswertungen ist auch einem menschlichen Einrichter rasch und intuitiv möglich.

Vorzugsweise wird die Position der Kontrastmarken in Linienrichtung bestimmt. Es wird also ausgewertet, wo längs der aufgenommenen Linie sich die Kontrastmarken befinden. Dazu müssen lediglich die entsprechenden Peaks lokalisiert werden, beispielsweise als Position eines Extremums, als Mittel aller Werte des Peaks, die ein Schwellenkriterium erfüllen, oder als Mittel zwischen den beiden Flanken am Rand der erfassten Kontrastmarke.

Vorzugsweise wird die jeweilige Breite als Funktion der Position bestimmt. Die jeweilige Breite einer erfassten Kontrastmarke wird somit der Position zugeordnet und eine Funktion gesucht, welche den Zusammenhang entsprechend diesen Stützpunkten möglichst treu wiedergibt, insbesondere durch Geradenfit beziehungsweise eine Regressionsgerade.

Die Funktion wird bevorzugt in zwei Gruppen einmal für die mit ihrer Spitze nach oben und einmal für die mit ihrer Spitze nach unten weisenden dreiecksförmigen Kontrastmarken gebildet. Dadurch entstehen dann insbesondere bei einem Geradenfit zwei Geradenabschnitte, und deren gegenseitige Lage und Ausrichtung erlaubt sehr einfach, noch auszurichtende Freiheitsgrade zu erkennen und auch zu quantifizieren.

Die Ausrichtung wird als richtig angesehen, wenn die Breite als Funktion der Position eine Horizontale bildet. Das ist ein erstes Kriterium, wie die Funktion oder im Falle zweier Gruppen die beiden Funktionen ausgewertet werden. Gerade auf eine Anzeige für einen menschlichen Einrichter ist dies sehr rasch und intuitiv prüfbar. So lässt sich etwa für zwei Geradenabschnitte der beiden Gruppen sehr leicht erfassen, ob sie zwei aufeinanderliegende Horizontale bilden. Abweichungen im Rahmen von Toleranzen sind denkbar und ein Maß für den Restfehler der Ausrichtung.

Eine Fehlausrichtung in Form einer Drehung (χ) um die optische Achse der Kamera wird vorzugsweise aus einem Winkel der Funktion gegen die Horizontale bestimmt. Sofern in diesem Freiheitsgrad noch eine Fehlausrichtung besteht, so bilden die beiden Geradenabschnitte der beiden Gruppen ein Kreuz, und der Winkel zwischen den Geradenabschnitten ist ein Maß für die Drehung χ. Bei einer gemeinsamen Auswertung ohne Gruppen der nach oben und unten weisenden Dreiecke lässt sich eine Gerade nicht mehr beziehungsweise nur noch mit großem Fehler fitten.

Eine Fehlausrichtung in Form einer horizontalen Verschiebung (a) oder horizontalen Verkippung (α) wird bevorzugt aus der Mittenposition der Kalibrationsmarken längs der Linie bestimmt. Anschaulich blickt die hier noch nicht korrekt ausgerichtete Kamera rechts oder links am Ziel vorbei. Die Mittenposition der Kalibrationsmarken lässt sich aus den einzelnen Positionen der Kalibrationsmarken bestimmen, beispielsweise als deren Mittelwert.

Eine Fehlausrichtung in Form einer vertikalen Verschiebung (b) oder vertikalen Verkippung (β) wird bevorzugt aus einem Parallelversatz der Funktion der beiden Gruppen bestimmt. Anschaulich blickt die hier noch nicht korrekt ausgerichtete Kamera oben oder unten am Ziel vorbei. Im Prinzip entspricht die Ausrichtung der horizontalen Ausrichtung. Allerdings wird keine Mittenposition der Kalibrationsmarken bestimmt, sondern ein Parallelversatz zwischen den beiden Geradenabschnitten, die zu den Breiten der Kalibrationsmarken gefittet wurden, ist das Maß für eine in diesen Freiheitsgraden noch bestehende Fehlausrichtung.

Das Ausrichtziel wird bevorzugt mehrfach parallelverschoben in verschiedenen Abständen aufgenommen. Denn bei Aufnahme aus nur einer Entfernung kann noch nicht zwischen einer Verschiebung a, b und einer Verkippung oder einem Schielen α, β unterschieden werden. Es ist darauf zu achten, dass das Ausrichtziel parallelverschoben wird, denn dessen Orientierungsänderung wirkt sich auf die genannten fünf Freiheitsgrade aus, und die Kamera sollte davon ausgehen dürfen, dass dieser Einfluss ausbleibt. Dazu wird das Ausrichtziel beispielsweise auf einer Schiene verfahren.

Vorzugsweise wird ein Geradenfit über die Mittenposition und/oder den Parallelversatz für verschiedene Abstände durchgeführt und eine horizontale und/oder vertikale Verschiebung a, b und/oder Verkippung α, β aus Steigung oder Achsenabschnitt der gefitteten Gerade bestimmt. Das ist ein einfaches Verfahren, um die zusätzliche Information aus den Aufnahmen des Ausrichtziels in unterschiedlichen Abständen auszuwerten und den Einfluss sowohl der Verschiebung a, b als auch der Verkippung α, β zu quantifizieren. Dabei wird bevorzugt der Abstand Null bei der vorderen Objektivhauptebene der Kamera angenommen.

Die Erfindung ist durch den Gegenstand der beigefügten Ansprüche definiert und wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Ansicht einer Kamera mit Ausrichtzielen in mehreren Abständen;
- Fig. 2: eine Draufsicht auf eine Ausführungsform eines Ausrichtziels mit alternierend auf dem Kopf stehenden dreieckigen Kontrastmarken;
- Fig. 3: eine Darstellung einiger beispielhafter Ausrichtungen des zeilenförmigen Erfassungsbereichs einer Kamera bezüglich des Ausrichtziels gemäß Figur 2;
- Fig. 4: eine Darstellung der Abhängigkeit der Breite der erfassten dreieckförmigen Kontrastmarken von der Position längs der Kamerazeile für den Fall eines richtig justierten Systems;
- Fig. 5: eine Darstellung gemäß Figur 4 für den Fall vertikaler Ausrichtfehler;
- Fig. 6: eine Darstellung gemäß Figur 4 für den Fall einer Verdrehung der Kamera;
- Fig. 7: eine Draufsicht auf eine Kamera und eines Ausrichtziels zur Illustration horizontaler Ausrichtfehler;
- Fig. 8: eine Seitenansicht einer Kamera und eines Ausrichtziels zur Illustration horizontaler Ausrichtfehler;
- Fig. 9: eine Frontalansicht einer Kamera zur Illustration einer Verdrehung der Kamera;
- Fig. 10a: eine Darstellung eines herkömmlichen Sanduhr-Ausrichtziels; und
- Fig. 10b: eine Darstellung des von einer richtig justierten Kamera aufgenommen Sensorsignals des Sanduhr-Ausrichtziels gemäß Figur 10a.

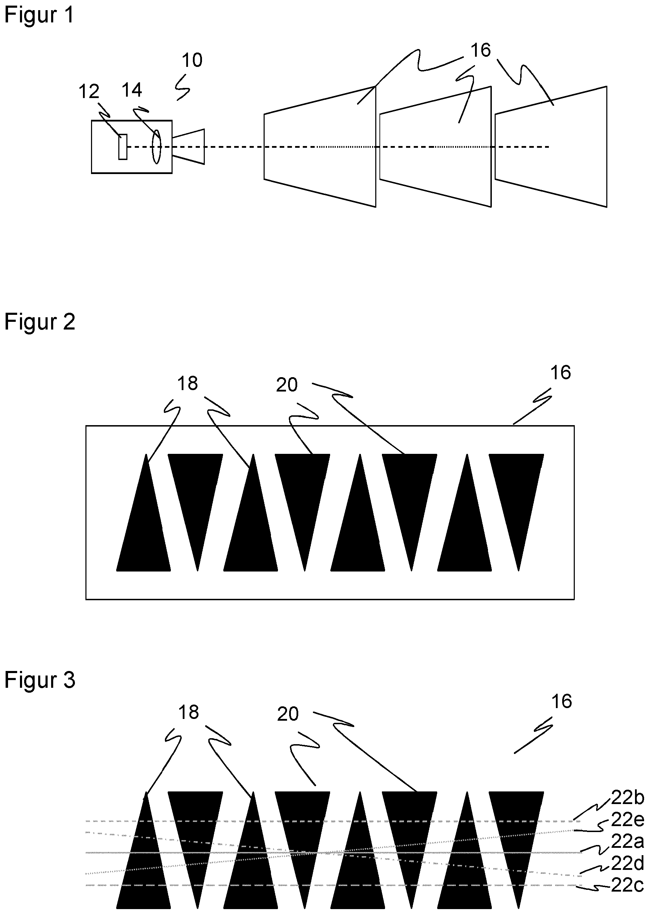

Figur 1 zeigt eine schematische Ansicht einer Kamera 10, die beispielsweise im Rahmen der Herstellung oder Endprüfung oder auch bei der Montage am Anwendungsort ausgerichtet werden soll beziehungsweise deren Ausrichtung geprüft werden soll. Die Kamera 10 ist vorzugsweise eine Zeilenkamera und ist nur ganz schematisch mit einem Bildsensor 12, beispielsweise einer Pixelzeile oder Pixelmatrix, und einem Objektiv 14 gezeigt. Einige nicht abschließende Ausgestaltungs- und Anwendungsmöglichkeiten der Kamera 10 sind einleitend genannt.

Der Kamera 10 wird während der Ausrichtung ein Ausrichtziel 16 in unterschiedlichen bekannten Abständen präsentiert. Der Bezugspunkt Null des Abstands ist vorzugsweise die vordere Hauptebene des Objektivs 14. Das Ausrichtziel 16 wird dabei parallelverschoben. Die Kamera 10 nimmt für jeden Abstand eine Zeile quer über das Ausrichtziel 16 auf, d.h. senkrecht zur Papierebene der Figur 1. Diese Kamerasignale, die ähnlich Figur 10b ein Intensitäts- oder Graustufensignal über die Zeilenposition darstellen, werden in der nachfolgend beschriebenen Weise ausgewertet, um die Ausrichtung der Kamera 10 zu verbessern oder zu prüfen.

Figur 2 zeigt eine Draufsicht auf eine Ausführungsform des Ausrichtziels 16. Es werden als Kontrastmarken keine Sanduhren verwendet wie herkömmlich gemäß Figur 10a, sondern Dreiecke 18, 20. Die Kontrastmarken in diesem Ausführungsbeispiel sind schwarz. Allgemein genügt es, wenn die Kontrastmarken sich deutlich von der Umgebung beziehungsweise dem Hintergrund unterscheiden. Es können also auch Reflektoren oder weiße Bereiche vor dunklem Hintergrund oder beliebige andere kontrastreiche Unterschiede vorgesehen sein.

Die Dreiecke 18, 20 sind gleichschenklig ausgebildet und in zwei Gruppen angeordnet, nämlich eine Gruppe der mit ihrer Spitze nach oben ausgerichteten Dreiecke 18 und eine Gruppe der mit ihrer Spitze nach unten ausgerichteten Dreiecke 20. Die Dreiecke 18, 20 sind gleichschenklig, zueinander kongruent und wechseln einander in ihrer Ausrichtung ab. Außerdem sind sie horizontal ausgerichtet und in einem gleichmäßigen Abstand zueinander angeordnet. Damit weist das Ausrichtziel 16 eine ganze Reihe von Regelmäßigkeiten und Symmetrien auf. Verbleibende Designparameter sind die Steigung der Dreiecke 18, 20, also die Winkel der Schenkel zur Grundlinie, sowie die Anzahl der Dreiecke 18, 20 im Kamerasichtbereich. In anderen Ausführungsformen sind nur einige der genannten regelmäßigen und symmetrischen Eigenschaften der Dreiecke 18, 20 verwirklicht, wobei aber jedenfalls nach oben und unten weisende Dreiecke 18, 20 in einer Reihenanordnung vorhanden sind.

Figur 3 zeigt nochmals das Ausrichtziel 16 und einige Beispiele dafür, wie die von der Kamera 10 aufgenommene Zeile 22a-e je nach Ausrichtung der Kamera 10 durch das Ausrichtziel 16 verläuft. Eine korrekte Ausrichtung bei einer horizontal und zentral verlaufenden Zeile 22a vor. Bei einer nach oben parallelverschobenen Zeile 22b oder einer nach unten parallelverschobenen Zeile 22c gibt es eine vertikale Verschiebung b und/oder eine vertikale Verkippung β. Denkbar sind weiterhin eine im Uhrzeigersinn verdrehte Zeile 22d und eine gegen den Uhrzeigersinn verdrehte Zeile 22e. In diesem Fall ist die Kamera 10 um ihre optische Achse um einen Winkel χ verdreht. Außerdem ist noch eine horizontale Verschiebung a und Verkippung α denkbar, was sich darin äußert, dass die Dreiecke 18, 20 nicht horizontal zentriert aufgenommen werden. Die verschiedenen Ausrichtfehler können einzeln oder überlagert auftreten.

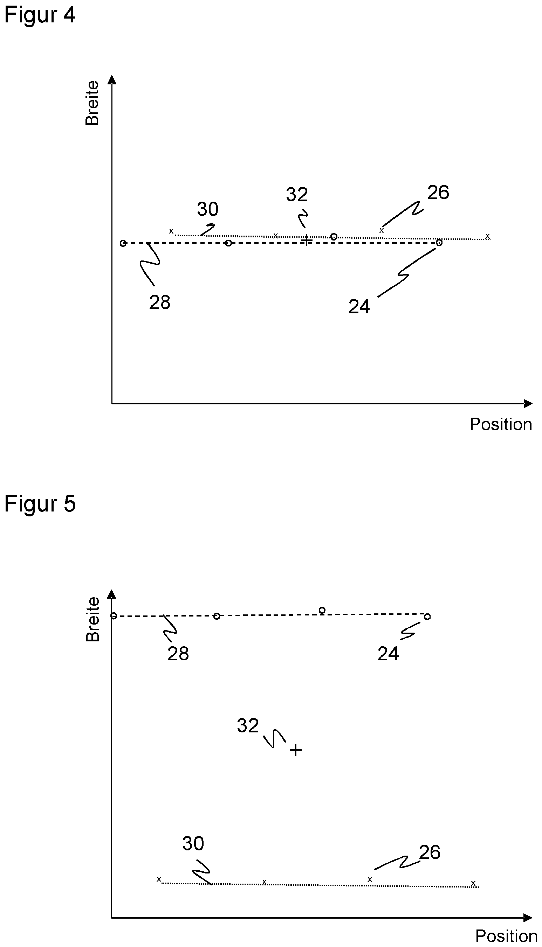

Anhand der Figuren 4 bis 6 wird nun eine mögliche Auswertung der Kamerasignale des Ausrichtziels 16 beschrieben. Dazu wird die Breite der erfassten Dreiecke 18, 20 bestimmt und deren Position zugeordnet. Die Dreiecke erzeugen Peaks im Kamerasignal, und zwar Maxima bei Kontrastmarken mit besonders hohem und Minima bei Kontrastmarken mit besonders geringem Reflexions- oder Remissionsvermögen. Die entsprechenden Peaks im Kamerasignal können leicht anhand von Schwellenkriterien oder dergleichen lokalisiert werden. Wegen des eigens geschaffenen Kontrastunterschieds der Kontrastmarken sind die Peaks und deren Flanke stark ausgeprägt. Es ergeben sich daher keine besonderen Schwierigkeiten, die Position und Breite eines solchen Peaks zu bestimmen, etwa für die Breite Pixel zu zählen, die ein Schwellenkriterium erfüllen, und deren Mittenlage als Position zu verwenden.

Figur 4 zeigt ein Beispiel der Breiten der Dreiecke 18, 20 in Abhängigkeit von deren Position bei idealer Ausrichtung der Kamera 10. Das entspricht der horizontalen und zentrierten Zeile 22a in Figur 3. Mit "o" sind die Messpunkte 24 für die vier nach oben weisenden Dreiecke 18, entsprechend mit "x" die Messpunkte 26 für die vier nach unten weisenden Dreiecke 20 eingetragen. Eine gestrichelte Linie ist eine erste Ausgleichsgerade 28 für die Messpunkte 24 der nach oben weisenden Dreiecke 18, eine durchgezogene Linie eine zweite Ausgleichsgerade 30 für die Messpunkte 26 der nach unten weisenden Dreiecke 20. Eine horizontale Mitte 32 ergibt sich beispielsweise als Mittelpunkt der zu allen Dreiecken 18, 20 bestimmten Positionen.

Im ausgerichteten Fall werden für alle Dreiecke 18, 20 identische Breiten erfasst. Daher sind beide Ausgleichsgeraden 28, 30 im Rahmen von Toleranzen horizontal zentriert und liegen aufeinander. Das ist also das leicht erkennbare Kriterium für ein ausgerichtetes System, und die nachfolgend erläuterten Abweichungen oder Ausrichtfehler lassen sich ebenso einfach ablesen. Die horizontale Ausrichtung ergibt sich dadurch, dass die horizontale Mitte 32 in der Zeile zentriert liegt.

Figur 5 zeigt eine Darstellung analog der Figur 4, jedoch nun mit einem Ausrichtfehler b, β der Kamera 10 in vertikaler Richtung. Das entspricht der Situation parallelverschobener Zeilen 22b-c in Figur 3. Die beiden Ausgleichsgeraden 28, 30 haben einen Parallelversatz zueinander, dessen Ausmaß die Fehlausrichtung quantifiziert. Das liegt daran, dass die eine Gruppe der Dreiecke 18, 20 auf Höhe der parallelverschobenen Zeile 22b-c eine geringere und die andere Gruppe der Dreiecke 20, 18 eine höhere Breite hat.

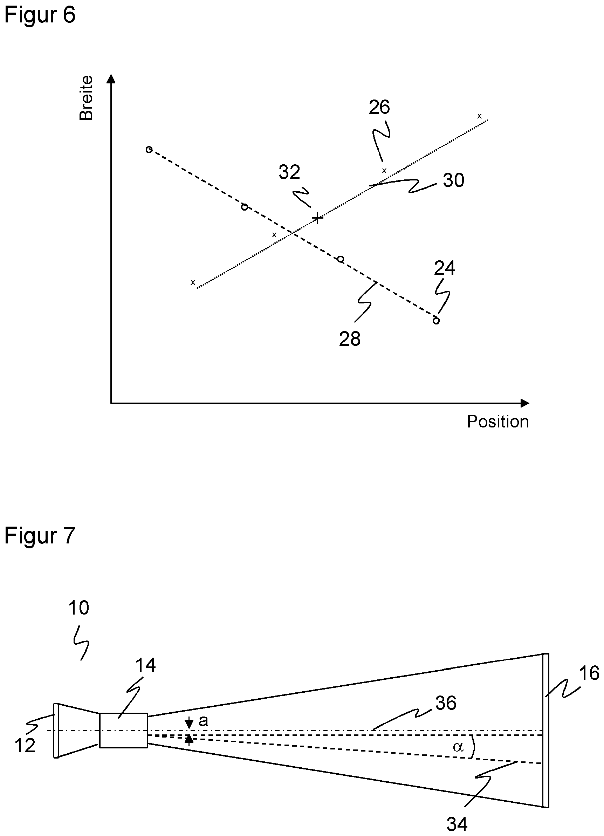

Figur 6 zeigt nochmals eine Darstellung analog der Figur 4 nun mit einer Verdrehung χ der Kamera 10 um deren optische Achse. Das entspricht den verdrehten Zeilen 22d-e in Figur 3 und äußert sich in Figur 6 dadurch, dass die beiden Ausgleichsgeraden 28, 30 einander kreuzen. Der Winkel quantifiziert den Ausrichtfehler χ. Die zu den Figuren 5, 6 erläuterten Ausrichtfehler können auch überlagert auftreten, und dann sind die Ausgleichsgeraden 28, 30 sowohl versetzt als auch verdreht.

Die Figuren 7 bis 9 illustrieren nochmals die verschiedenen Ausrichtfehler, d.h. die Verschiebungen oder Offsets a, b und die Verkippungen oder Schielwinkel α, β, χ. Figur 7 ist eine Draufsicht und illustriert die horizontale Verschiebung a und die horizontale Verkippung a. Die tatsächliche horizontale Ausrichtung 34 kann von der gewünschten idealen Ausrichtung 36 in a und/oder α abweichen. Dabei ist eine vereinfachte Kameradarstellung nur der Ebene des Bildsensors 12, eines ganz schematischen Objektivs 14 und des Ausrichtziels 16 in einem der mehreren Abstände gezeigt.

Der Schielwinkel α und das entsprechende Offset a wird über die Mittenausrichtung des Ausrichtziels 16 bestimmt. Die horizontale Mitte 32 des Ausrichtziels ist bekannt. Die horizontale Mittenposition kann nach mehreren Aufnahmen in unterschiedlichen Abständen des Ausrichtziels 16 als Funktion des Abstands bestimmt werden, wobei diese Funktion aufgrund der optischen Gesetzmäßigkeiten als Gerade gefittet wird. Die Steigung der Geraden entspricht dem Winkel α und ihr Schnittpunkt mit der vorderen Objektivhauptebene dem Offset a. Wird der Nullpunkt in die vordere Objektivhauptebene gelegt, so ist a der Achsenabschnitt der Gerade. Damit dies auch numerisch korrekt ist, sollte für den Geradenfit die jeweils gemessene horizontale Mittenposition in der Objektebene in einer geeigneten Längeneinheit wie Millimeter angegeben sein. Über die bekannte Größe des Ausrichtziels 16 beziehungsweise der Dreiecke 18, 20 kann die Umrechnung zwischen Objektebene und Bildebene erfolgen.

Figur 8 zeigt eine zugehörige Seitenansicht, um die vertikale Verschiebung b und die vertikale Verkippung β und deren Korrektur zu illustrieren. Das läuft ganz analog zu der horizontalen Ausrichtung ab. Allerdings wird hier natürlich nicht die horizontale Mittenposition herangezogen. Vielmehr wird der in Figur 5 gezeigte Parallelversatz der beiden Ausgleichsgeraden 28, 30 beziehungsweise deren individuelle Abweichung von der Mitte als Maß für die Abweichung herangezogen.

Figur 9 zeigt eine zugehörige Vorderansicht, um als verbleibende fünfte Ausrichtgröße eine Verdrehung χ um die optische Achse zu illustrieren. Für diese Ausrichtung genügt die Aufnahme des Ausrichtziels in einem einzigen Abstand, aber die mehreren Kameraaufnahmen aus unterschiedlichem Abstand können auch für eine Mittelung oder eine sonstige gemeinsame Auswertung herangezogen werden. Die Verdrehung χ entspricht der Schräglage der Ausgleichsgeraden 28, 30 in Figur 6. Für die Berechnung des Schielwinkels χ müssen wie in den zu Figur 7 und 8 erläuterten Fällen der Abbildungsmaßstab sowie die Steigung der Dreiecke 18, 20 einbezogen werden.

Über die beschriebenen Ausrichtungen hinaus lässt sich auch eine Verzeichnung des Objektivs 14 durch einen nicht-linearen Fit der gemessenen Breiten der Dreiecke 18, 20 bestimmen und gegebenenfalls korrigieren.

## Patentansprüche

1. Verfahren zum Ausrichten einer Zeilenkamera (10) mit einem Ausrichtziel (16), bei dem ein Bild zumindest einer Linie (22a-e) des Ausrichtziels (16) aufgenommen wird und in dem Bild die Kontrastmarken (18, 20) lokalisiert werden, wobei das Ausrichtziel mehrere dreieckförmige Kontrastmarken (18, 20) aufweist, die in einer Reihe angeordnet sind und mindestens eine Kontrastmarke (18) mit einer Spitze ihrer Dreiecksform nach oben und mindestens eine Kontrastmarke (20) nach unten zeigt,
**dadurch gekennzeichnet,**
**dass** die Kontrastmarken (18, 20) die Form eines gleichschenkeligen Dreiecks aufweisen und jeweils die Spitze zwischen den gleichen Schenkeln nach oben oder unten zeigt, dass die Breite der Kontrastmarken (18, 20) in Richtung der Linie (22a-e) bestimmt wird und dass die Ausrichtung als richtig angesehen wird, wenn alle Breiten übereinstimmen und dass die Position der Kontrastmarken (18, 20) in Linienrichtung (22a-e) und die jeweilige Breite als Funktion der Position bestimmt wird und die Funktion in zwei Gruppen einmal für die mit ihrer Spitze nach oben (18) und einmal für die mit ihrer Spitze nach unten weisenden dreiecksförmigen Kontrastmarken (20) gebildet wird.

2. Verfahren nach Anspruch 1,
wobei mindestens einige, insbesondere alle Kontrastmarken (18, 20) eine zueinander kongruente Form aufweisen.

3. Verfahren nach Anspruch 1 oder 2,
wobei die Kontrastmarken (18, 20) in der Reihe auf gleicher Höhe ausgerichtet sind.

4. Verfahren nach einem der vorhergehenden Ansprüche,
wobei die Kontrastmarken (18, 20) mit der Spitze alternierend nach oben und nach unten zeigen.

5. Verfahren nach einem der vorhergehenden Ansprüche,
wobei die Orientierung der Kamera (10) verändert wird, bis alle Breiten übereinstimmen.

6. Verfahren nach einem der vorhergehenden Ansprüche,
wobei die Ausrichtung als richtig angesehen wird, wenn die Breite als Funktion der Position eine Horizontale bildet.

7. Verfahren nach einem der vorhergehenden Ansprüche,
wobei eine Fehlausrichtung in Form einer Drehung (χ) um die optische Achse der Kamera (10) aus einem Winkel der Funktion gegen die Horizontale bestimmt wird.

8. Verfahren nach einem der vorhergehenden Ansprüche,
wobei eine Fehlausrichtung in Form einer horizontalen Verschiebung (a) oder horizontalen Verkippung (α) aus der Mittenposition (32) der Kalibrationsmarken (18, 20) längs der Linie (22a-e) bestimmt wird.

9. Verfahren nach einem der vorhergehenden Ansprüche,
wobei eine Fehlausrichtung in Form einer vertikalen Verschiebung (b) oder vertikalen Verkippung (β) aus einem Parallelversatz der Funktion der beiden Gruppen bestimmt wird.

10. Verfahren nach einem der vorhergehenden Ansprüche,
wobei das Ausrichtziel (16) mehrfach parallelverschoben in verschiedenen Abständen aufgenommen wird.

11. Verfahren nach Anspruch 8 oder 9 und 10,
wobei eine Geradenfit für die Mittenposition (32) und/oder den Parallelversatz für verschiedene Abstände durchgeführt und eine horizontale und/oder vertikale Verschiebung (a, b) und/oder Verkippung (α, β) aus Steigung oder Achsenabschnitt der gefitteten Gerade bestimmt wird.

## Claims

1. A method for aligning a line camera (10) with an alignment target (16), wherein an image of at least one line (22a-e) of the alignment target (16) is acquired and contrast marks (18, 20) are located in the image, wherein the alignment target comprises a plurality of triangular contrast marks (18, 20) arranged in a line, and at least one contrast mark (18) points upwards with a vertex of its triangular shape and at least one contrast mark (20) points downwards,
**characterized in that** the contrast marks (18, 20) have the shape of an isosceles triangle and in each case the apex between the two sides of equal length points upwards or downwards, **in that** the width of the contrast marks (18, 20) is determined in the direction of the line (22a-e), and **in that** the alignment is considered to be correct if all widths match, and **in that** the position of the contrast marks (18, 20) in the direction of the line (22a-e) and the respective width is determined as a function of the position and the function is formed in two groups once for the triangular contrast marks (20) pointing with their apex upwards (18) and once for the triangular contrast marks (20) pointing with their apex downwards.

2. The method according to claim 1,
wherein at least some, in particular all, of the contrast marks (18, 20) have a mutually congruent shape.

3. The method according to claim 1 or 2,
wherein the contrast marks (18, 20) are aligned in the line at a same height.

4. The method according to any one of the preceding claims,
wherein the contrast marks (18, 20) point alternately upwards and downwards with their apex.

5. The method according to any one of the preceding claims,
wherein the orientation of the camera (10) is changed until all widths match.

6. The method according to any one of the preceding claims,
wherein the orientation is considered correct when the width as a function of position forms a horizontal.

7. The method according to any one of the preceding claims,
wherein misalignment in the form of a rotation (χ) about the optical axis of the camera (10) is determined from an angle of the function against the horizontal.

8. The method according to any one of the preceding claims,
wherein misalignment in the form of horizontal displacement (a) or horizontal tilt (α) is determined from the center position (32) of the calibration marks (18, 20) along the line (22a-e).

9. The method according to any of the preceding claims,
wherein misalignment in the form of a vertical displacement (b) or vertical tilt (β) is determined from a parallel offset of the function of the two groups.

10. The method according to any of the preceding claims,
wherein the alignment target (16) is recorded several times parallelly displaced at different distances.

11. The method according to claim 8 or 9 and 10,
wherein a straight line fit is performed for the center position (32) and/or the parallel offset for different distances, and a horizontal and/or vertical displacement (a, b) and/or tilt (α, β) is determined from slope or axis intercept of the fitted straight line.

## Revendications

1. Procédé pour aligner une caméra à balayage linéaire (10) avec une cible d'alignement (16), dans lequel on enregistre une image d'au moins une ligne (22a - e) de la cible d'alignement (16) et on localise les repères de contraste (18, 20) dans ladite image, la cible d'alignement présentant plusieurs repères de contraste triangulaires (18, 20) disposés en une rangée, et au moins un repère de contraste (18) ayant un sommet de sa forme triangulaire dirigé vers le haut et au moins un repère de contraste (20) étant dirigé vers le bas,
**caractérisé en ce que**
les repères de contraste (18, 20) ont la forme d'un triangle isocèle, et le somment respectif entre les mêmes côtés est dirigé vers le haut ou vers le bas, **en ce que** la largeur des repères de contraste (18, 20) est déterminée dans la direction de la ligne (22a - e), et **en ce que** l'alignement est considéré comme correct si toutes les largeurs coïncident, et **en ce que** la position des repères de contraste (18, 20) est déterminée dans la direction de ligne (22a - e) et la largeur respective est déterminée en tant que fonction de la position, et la fonction est formée en deux groupes, une fois pour les repères de contraste triangulaires (20) ayant leur sommet dirigé vers le haut (18), et une fois pour ceux ayant leur sommet dirigé vers le bas.

2. Procédé selon la revendication 1, dans lequel au moins certains, en particulier tous les repères de contraste (18, 20) ont une forme mutuellement congruente.

3. Procédé selon la revendication 1 ou 2, dans lequel les repères de contraste (18, 20) en rangée sont alignés à la même hauteur.

4. Procédé selon l'une des revendications précédentes, dans lequel les repères de contraste (18, 20) ont leurs sommets dirigés en alternance vers le haut et vers le bas.

5. Procédé selon l'une des revendications précédentes, dans lequel l'orientation de la caméra (10) est modifiée jusqu'à ce que toutes les largeurs coïncident.

6. Procédé selon l'une des revendications précédentes, dans lequel l'alignement est considéré comme correct si la largeur en tant que fonction de la position forme une horizontale.

7. Procédé selon l'une des revendications précédentes, dans lequel un désalignement sous la forme d'une rotation (χ) autour de l'axe optique de la caméra (10) est déterminé à partir d'un angle de la fonction par rapport à l'horizontale.

8. Procédé selon l'une des revendications précédentes, dans lequel un désalignement sous la forme d'un déport horizontal (a) ou d'une inclinaison horizontale (α) est déterminé à partir de la position centrale (32) des repères de calibrage (18, 20) le long de la ligne (22a - e).

9. Procédé selon l'une des revendications précédentes, dans lequel un désalignement sous la forme d'un déport vertical (b) ou d'une inclinaison verticale (β) est déterminé à partir d'un décalage parallèle de la fonction des deux groupes.

10. Procédé selon l'une des revendications précédentes, dans lequel la cible d'alignement (16) est enregistrée en étant déplacée plusieurs fois parallèlement à des distances différentes.

11. Procédé selon la revendication 8 ou 9 et 10, dans lequel un fitting est effectué pour la position centrale (32) et/ou pour le décalage parallèle pour différentes distances, et un déport horizontal et/ou vertical (a, b) et/ou une inclinaison (α, β) est déterminé(e) à partir de la pente ou de section d'axe de la droite fittée.
